# FASCICULE DE BREVET EUROPEEN

(11) **EP 3 140 611 B1**
(45) Date de publication et mention de la délivrance du brevet: **06.06.2018**
(21) Numéro de dépôt: 15719497.8
(22) Date de dépôt: 06.05.2015
(51) Int. Cl.: G01B 11/25, G01B 11/30, G06T 7/521

(54) **DISPOSITIF ET PROCÉDÉ DE RECONSTRUCTION TRIDIMENSIONNELLE D'UNE SCÈNE PAR ANALYSE D'IMAGE**
VORRICHTUNG UND VERFAHREN ZUR DREIDIMENSIONALEN REKONSTRUKTION EINER SZENE DURCH BILDANALYSE
DEVICE AND METHOD FOR THREE-DIMENSIONAL RECONSTRUCTION OF A SCENE BY IMAGE ANALYSIS

(30) Priorité: 07.05.2014 FR 1454153
(43) Date de publication de la demande: 15.03.2017
(73) Titulaire: FRAMATOME, 92400 Courbevoie (FR)
(72) Inventeur: CAULIER, Yannick, 04100 Manosque (FR)
(74) Mandataire: Lavoix
(86) Numéro de dépôt international: PCT/EP2015/059994
(87) Numéro de publication internationale: WO 2015/169873

(56) Documents cités:
- FR-A1- 2 292 213
- US-A1- 2010 201 811
- US-A1- 2012 133 954

## Description

La présente invention concerne le domaine de la reconstruction tridimensionnelle d'une scène à partir d'une ou plusieurs images de la scène prises à l'aide d'un appareil de prise d'image et analyse des images prises au moyen d'un dispositif d'analyse.

La reconstruction tridimensionnelle d'une scène par analyse d'image trouve des applications dans l'industrie, notamment pour déterminer le relief tridimensionnel d'une pièce ou d'une surface située dans un endroit difficilement accessible, comme par exemple dans un réacteur nucléaire, notamment dans un générateur de vapeur du réacteur nucléaire. Il permet notamment de contrôler l'état de surface d'un cordon de soudure réalisé entre deux pièces, ou de mesurer la rugosité d'une surface.

Sur une image prise par un appareil de prise d'image, des éléments situés dans une zone de netteté apparaissent nets tandis que des éléments situés hors de la zone de netteté apparaissent flous. La zone de netteté est une tranche de l'espace comprise entre un plan net avant et un plan net arrière, parallèles et séparés par une distance appelée profondeur de champ. Le plan net avant et le plan net arrière sont situés de part et d'autre d'un plan de netteté maximale.

Il est possible de déterminer une reconstruction tridimensionnelle d'une scène par analyse du flou optique sur une image.

Dans une méthode de reconstruction tridimensionnelle appelée DFF (« Depth From Focus » en anglais), plusieurs images d'une scène sont prises avec un appareil de prise d'image, en décalant à chaque fois le plan de netteté maximale le long de l'axe de prise d'image entre les images, sans déplacer les éléments de la scène entre les prises d'image. En combinant ensuite les régions nettes des différentes images capturées, il est possible de reconstruire plan par plan le relief tridimensionnel de la scène.

Dans une autre méthode de reconstruction tridimensionnelle appelée DFD (« Depth From Defocus » en anglais), le relief de la scène est reconstruit par analyse du niveau de flou optique dans les images. Sur chaque image, plus une zone présente un niveau de flou élevé, plus elle est décalée en profondeur par rapport à la zone de netteté. En connaissant les paramètres optiques de l'appareil de prise d'images, il est possible de déterminer la profondeur du point de la scène associé à chaque pixel de l'image.

Le niveau de flou optique sur une image est mesuré par exemple en mesurant le contraste sur l'image. Un contraste faible indique une région floue de l'image tandis qu'un contraste élevé indique une région nette de l'image.

Il est possible de projeter sur la scène un motif lumineux texturé qui augmente le contraste pour améliorer la précision de l'analyse du flou optique sur les images capturées. Le motif lumineux comprend par exemple des lignes parallèles, des franges ou un damier.

Néanmoins, ceci ne donne pas entière satisfaction en termes de précision, par exemple pour la reconstruction tridimensionnelle de surfaces à faible rugosité.

FR2292213A1 et US20100201811A1 divulguent respectivement un procédé de visualisation de lignes de niveau et un dispositif de reconstruction tridimensionnelle utilisant le phénomène de Moiré.

US201201339564A1 divulgue un dispositif de reconstruction tridimensionnelle d'un objet dans lequel des systèmes de franges sont projetés successivement sur l'objet.

Un des buts de la présente invention est de proposer un dispositif de reconstruction tridimensionnelle d'une scène par analyse d'images prises à l'aide d'un appareil de prise d'image, qui soit facile à utiliser et possède une précision satisfaisante.

A cet effet, l'invention propose un dispositif de reconstruction tridimensionnelle d'une scène par analyse d'image selon la revendication 1. Des caractéristiques optionnelles du dispositif de reconstruction tridimensionnelle sont définies aux revendications 2 et 3.

L'invention concerne également un procédé de reconstruction tridimensionnelle d'une scène par analyse d'image selon la revendication 4. Des caractéristiques optionnelles du procédé de reconstruction tridimensionnelle sont définies aux revendications 5 et 6.

L'invention et ses avantages seront mieux compris à la lecture de la description qui va suivre, donnée uniquement à titre d'exemple, et faite en référence aux dessins annexés, sur lesquels :
- la Figure 1 est une vue schématique de face d'un dispositif de reconstruction tridimensionnelle d'une scène par analyse d'image ; et
- la Figure 2 est une représentation schématique de motifs lumineux projetés par le dispositif de reconstruction tridimensionnelle, avant et après superposition.

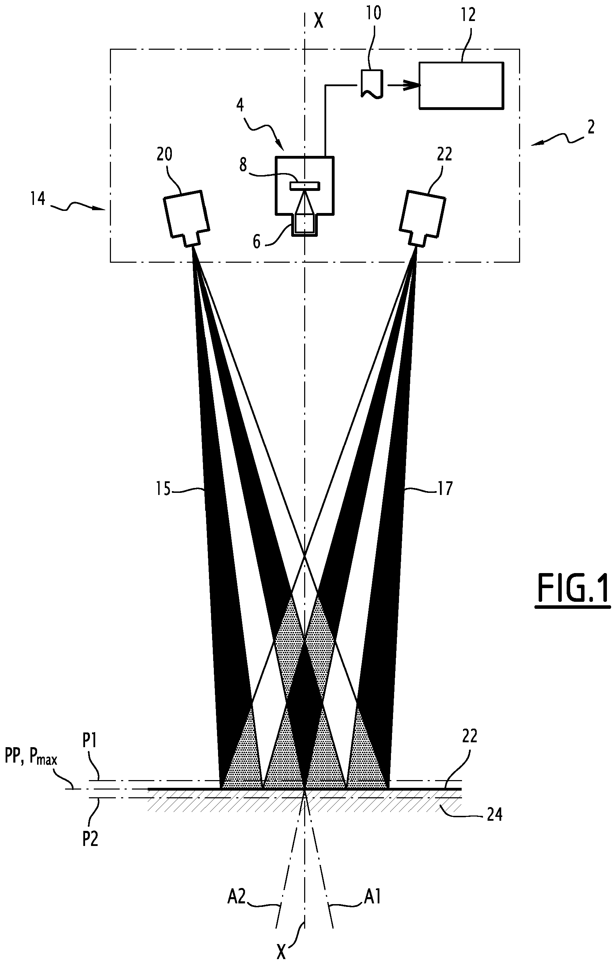

Le dispositif de reconstruction tridimensionnelle 2 de la figure 1 est adapté pour reconstruire le relief tridimensionnel d'une scène par analyse d'image de la scène.

Le dispositif de reconstruction tridimensionnelle 2 comprend un appareil de prise d'image 4 numérique, par exemple un appareil photo numérique ou une caméra numérique, pour prendre des images numériques de la scène.

L'appareil de prise d'image 4 comprend un objectif 6 pour focaliser la lumière de la scène sur un capteur 8 matriciel. Le capteur 8 éclairé par la lumière de la scène capture une image 10 matricielle de la scène. L'image 10 matricielle est formée d'une matrice de pixels, à chaque pixel étant associé des paramètres (intensité lumineuse pour chaque couleur élémentaire pour une image en couleur ou niveau de gris pour une image en noir et blanc). Chaque pixel de l'image correspond à un point de la scène.

L'appareil de prise d'image 4 présente un axe de prise d'image X, correspondant à l'axe optique de son objectif 6.

L'appareil de prise d'image 4 possède un plan de netteté maximale Pmax contenu dans une zone de netteté qui est une tranche de l'espace délimitée entre un plan net avant P1 et un plan net arrière P2 situés de part et d'autre du plan de netteté maximale Pmax.

Le plan de netteté maximale Pmax, le plan net avant P1 et le plan net arrière P2 sont perpendiculaires à l'axe de prise d'image X et parallèles entre eux. La distance entre le plan net avant P1 et le plan net arrière P2 prise suivant l'axe de prise d'image X est la profondeur de champ.

L'appareil de prise d'image 4 prend des images dans lesquelles les éléments de la scène inclus dans la zone de netteté sont nets et les éléments de la scène en dehors de zone de netteté sont flous.

La distance du plan de netteté maximale Pmax à l'appareil de prise d'image 4 et la profondeur de champ sont fonction des paramètres de l'appareil de prise d'image 4 (focale, ouverture de diaphragme...). Les paramètres de l'appareil de prise d'image 4 sont réglables ou fixes.

De préférence, pour la reconstruction tridimensionnelle, les paramètres de l'appareil de prise d'image 4 sont choisis ou réglés de telle manière que la profondeur de champ est faible, par exemple inférieure à la profondeur de la scène à reconstruire. A titre d'exemple, des tests ont montrés qu'il est possible de reconstruire avec une résolution en profondeur de 1/10 mm une scène d'environ 40 mm de profondeur avec une profondeur de champs de l'ordre de 20 mm. Des profondeurs de champs plus importantes peuvent aussi être considérées, dans le cas où la texture de la surface permet de déterminer le maximum de la courbe de contraste.

L'appareil de prise d'image 4 comprend un dispositif d'analyse 12 électronique propre à analyser les images capturées par l'appareil de prise d'image 4 pour réaliser une reconstruction tridimensionnelle de la scène par analyse des images capturées.

Le dispositif d'analyse 12 comprend un processeur et une mémoire dans laquelle est stockée une application informatique contenant des instructions logicielles exécutables par le processeur pour calculer automatiquement une reconstruction tridimensionnelle de la scène par analyse d'image.

Le dispositif de reconstruction tridimensionnelle 2 comprend un dispositif de projection 14 pour projeter sur la scène un premier motif lumineux 16 et un deuxième motif lumineux 18 texturés et complémentaires, projetés de manière à former des images élémentaires nettes dans un plan de projection PP situé la zone de netteté de l'appareil de prise d'image 4, de façon à former une image combinée uniforme dans le plan de projection PP. Selon l'invention, comme illustré, le plan de projection PP est sensiblement confondu avec le plan de netteté maximale Pmax

Le dispositif de projection 14 est configuré pour projeter un premier faisceau 15 lumineux de projection du premier motif lumineux 16 et un deuxième faisceau 17 de projection du deuxième motif lumineux 18 selon respectivement un premier axe de projection A1 et un deuxième axe de projection A2 faisant un angle non nul entre eux. Le premier faisceau 15 et le deuxième faisceau 17 se croisent.

Au moins un axe de projection A1, A2 est distinct de l'axe de prise d'image X et fait un angle non nul avec ce dernier. Dans l'exemple illustré, chaque axe de projection A1, A2 est distinct de l'axe de prise d'image X et fait un angle non nul avec ce dernier. L'axe de prise d'image X forme ici la bissectrice entre les axes de projection A1, A2. Les axes de projection A1, A2 sont concourants avec l'axe de prise d'image X.

Tel qu'illustré sur la Figure 1, le dispositif de projection 14 comprend un premier projecteur 20 pour projeter le premier motif lumineux 16 et un deuxième projecteur 22 pour projeter le deuxième motif lumineux 18.

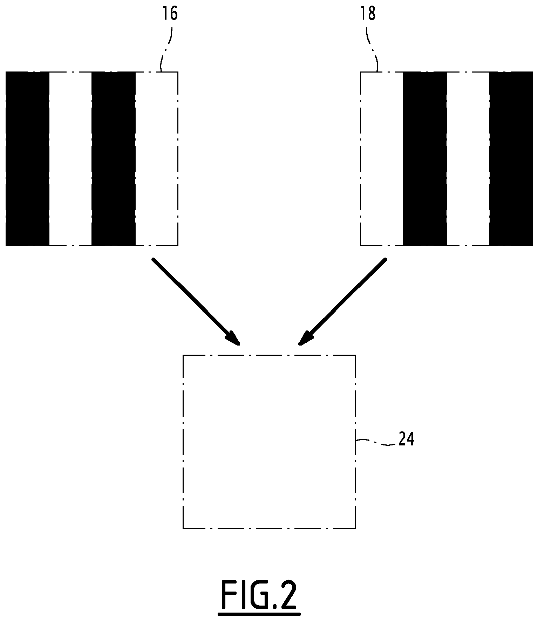

Tel qu'illustrés sur la Figure 2, chaque motif lumineux 16, 18 est texturé, et possède des zones lumineuses et des zones sombres. Les motifs lumineux 16 et 18 sont ici chacun formé de franges lumineuses, c'est-à-dire d'une pluralité de bandes rectilignes parallèles alternativement lumineuses et sombres. Les motifs lumineux 16, 18 sont ici en noir et blancs.

Les motifs lumineux 16, 18 sont complémentaires, de telle sorte qu'en les superposant dans le plan de projection PP dans lequel les motifs lumineux sont nets, il en résulte une image combinée 24 uniforme avec une intensité lumineuse homogène. Les motifs lumineux 16, 18 complémentaires sont superposés de façon qu'une zone sombre d'un motif lumineux se superpose à une zone lumineuse de l'autre motif lumineux.

Du fait de l'angle non nul entre les axes de projection A1, A2, dès qu'un point de la scène est situé hors du plan de projection, il se situe, en fonction de sa position et de sa profondeur :
- dans une zone de luminosité intermédiaire, correspondant à l'intersection d'une zone sombre d'un des motifs lumineux 16, 18 avec une zone lumineuse de l'autre des motifs lumineux 16, 18, et où les motifs lumineux ne sont pas nets et l'intensité lumineuse est diminuée ;
- dans une zone d'intensité lumineuse élevée, correspondant à l'intersection de deux zones lumineuses des motifs lumineux 16, 18 et où l'intensité lumineuse est plus élevée que dans le plan de projection PP ; et/ou
- dans une zone d'intensité lumineuse faible, correspondant à l'intersection de deux zone sombres des deux motifs lumineux 16, 18 et où l'intensité lumineuse est plus faible que dans le plan de projection PP.

L'intensité lumineuse d'un point de la scène situé hors du plan de projection PP est différente (inférieure ou supérieure) de celle d'un point de la scène situé dans le plan de projection PP. L'intensité lumineuse de chaque pixel d'une image prise par l'appareil d'image 4 est donc indicative de la profondeur du point correspondant de la scène.

L'homogénéité de l'intensité sur l'image varie en fonction de la profondeur de la scène. Plus une région de la scène est éloignée du plan de projection, plus l'homogénéité de l'intensité sur une zone correspondante de l'image est faible. Plus une région de la scène est proche du plan de projection, plus l'homogénéité de l'intensité sur une zone correspondante de l'image est élevée.

Le dispositif d'analyse d'image 12 est programmé pour parcourir chaque image prise par l'appareil d'image 4 de manière à détecter les variations d'homogénéité d'intensité, de manière à déterminer la position des points de la scène par rapport au plan de projection et/ou à mesurer la profondeur des points de la scène correspondant à chaque pixel. Ceci permet de calculer une reconstruction tridimensionnelle de la scène.

Dans un mode de réalisation, l'appareil de prise d'image 4 fournit des images en noir et blanc. Une image en noir et blanc associe un niveau de gris à chaque pixel, représentatif de l'intensité lumineuse de ce pixel. Dans ce cas, le dispositif d'analyse d'image 12 est programmé pour analyser l'intensité lumineuse sur une telle image en se basant sur le niveau de gris de l'image.

Dans un mode de réalisation, l'appareil de prise d'image 4 fournit des images en couleur. Une image en couleur comprend trois images d'intensité chacun associée à une couleur respective, chaque image d'intensité associée à une couleur associant à chaque pixel de l'image une intensité lumineuse dans cette couleur. Les trois couleurs sont par exemple les trois couleurs élémentaires (vert, jaune, bleu). Dans ce cas, le dispositif d'analyse d'image 12 est programmé pour analyser l'intensité lumineuse sur une image capturée en analysant l'intensité lumineuse sur chacun des trois images d'intensité puis en combinant les analyses, par exemple en sommant pour chaque pixel les intensités lumineuses des trois images d'intensité.

Le dispositif d'analyse d'image 12 fournit par exemple en sortie une reconstruction tridimensionnelle sous la forme d'une carte de profondeur de la scène, qui associe une profondeur à chaque pixel d'une image de la scène prises par l'appareil de prise d'image.

Le dispositif d'analyse d'image 12 est programmé pour calculer une reconstruction tridimensionnelle de la scène en fonction de la profondeur associée à chaque point de la scène. Selon l'invention, le dispositif de reconstruction tridimensionnelle 2 est programmé pour prendre une série d'images de la scène en décalant conjointement le plan de netteté maximale Pmax et le plan de projection PP entre chaque prise de vue, le dispositif d'analyse d'image 12 étant programmé pour calculer la reconstruction tridimensionnelle de la scène plan par plan, par exemple en déterminant pour chaque image les éléments net situés dans le plan de projection PP. Pour décaler le plan de netteté maximale Pmax et le plan de projection PP, l'appareil de prise d'image 4 est réglable et/ou déplaçable suivant son axe de prise d'image X, et/ou le dispositif de projection 14 est réglable et/ou déplaçable le long de l'axe de prise d'image X.

Dans un mode de réalisation, le dispositif d'analyse d'image 12 est programmé pour calculer la position de chaque point de la scène par rapport au plan de projection PP, par exemple en fonction d'une variation de netteté du point entre des images d'une série d'images prises en décalant le plan de projection PP (et conjointement le plan de netteté maximale) entre les prises de vue. Si la netteté d'un point de la scène augmente entre deux prises de vue, le plan de projection PP s'est rapproché de ce point de la scène. Si la netteté d'un point de la scène diminue entre deux prises de vue, le plan de projection PP s'est éloigné de ce point de la scène. La position du point de la scène est déduite de la variation de netteté de ce point de la scène et du sens de déplacement du plan de projection PP entre les prises de vue.

Dans un mode de réalisation, le dispositif d'analyse d'image 12 est programmé pour déterminer une reconstruction tridimensionnelle de la scène en fonction de la position des points de la scène par rapport au plan de projection PP, déterminée par exemple à partir d'une variation de netteté du point dans une série d'images (par ex. deux images) entre lesquelles le plan de projection PP (et conjointement le plan de netteté maximale Pmax) a été décalé, et en fonction de la profondeur de chaque point de la scène déterminée à partir d'une détection des variations d'homogénéité d'intensité sur au moins une image.

La scène est ici formée par une surface 22 d'un objet 24 que l'on souhaite examiner.

En fonctionnement, l'objet 24 est disposé dans le champ de vision de l'appareil de prise d'image 4, la surface22 à examiner étant orientée vers l'appareil de prise d'image 4. Le dispositif de projection 14 projette les motifs lumineux 16, 18 sur la surface 22 à examiner. Les motifs lumineux 16, 18 se superposent dans le plan de projection PP situé dans la zone de netteté P1 - P2 de l'appareil de prise d'image 4 en formant un éclairage d'intensité lumineuse homogène dans le plan de projection PP. L'appareil de prise d'image 4 prend au moins une image 10 de la scène et fournit l'image au dispositif d'analyse 12 qui reconstruit la scène en trois dimensions à partir de la ou chaque image, par exemple en calculant une profondeur pour chaque pixel d'une image prise par l'appareil de prise d'image 4.

Grâce à l'invention, il est possible de procéder à une reconstruction tridimensionnelle d'une scène avec une précision satisfaisante. En particulier, il est possible de reconstruire en trois dimensions une surface présentant une faible rugosité.

En effet, la mesure de la profondeur par analyse du flou optique sur une image est généralement basée sur une mesure de contraste, qui est une mesure relative. Pour la mesure de la rugosité d'une surface, le niveau de flou mesuré sur une image de la surface dépend ainsi de la rugosité de la surface, et si une surface présente une faible rugosité, les différences de niveau de flou sont faibles entre les régions de l'image et la précision de mesure est faible.

En revanche, la projection de motifs lumineux complémentaires superposés permet de mettre en oeuvre une mesure de profondeur basée sur la variation de l'homogénéité de l'intensité qui ne dépend pas de la rugosité globale de la surface, et qui permet une mesure de profondeur précise, même pour une surface de rugosité faible.

## Revendications

1. Dispositif de reconstruction tridimensionnelle d'une scène par analyse d'image, comprenant un appareil de prise d'image (4) pour capturer des images de la scène, un dispositif d'analyse (12) pour calculer une reconstruction tridimensionnelle de la scène à partir d'au moins une image (10) de la scène prises par l'appareil de prise d'image (4), et un dispositif de projection (14) pour projeter un premier motif lumineux et un deuxième motif lumineux complémentaires sur la scène examinée, le premier motif lumineux et le deuxième motif lumineux étant projetés suivant des axes de projection (A1 ; A2) distincts faisant un angle non nul entre eux, de manière à se superposer en formant une image uniforme d'intensité homogène dans un plan de projection sensiblement confondu avec un plan de netteté maximale de l'appareil de prise d'image (4), dans lequel le dispositif de reconstruction tridimensionnelle est programmé pour capturer une série d'images (10) de la scène en déplaçant conjointement le plan de netteté maximale et le plan de projection par rapport à la scène entre les prises de vue, le dispositif d'analyse (12) étant programmé pour calculer une reconstruction tridimensionnelle de la scène plan par plan à partir de la série d'images (10), à partir d'une mesure de la variation de l'homogénéité de l'intensité lumineuse sur chaque image (10) de la scène.

2. Dispositif de reconstruction tridimensionnelle selon la revendication 1, dans lequel le premier motif lumineux et le deuxième motif lumineux comprennent chacun des zones lumineuses et des zones sombres formant un motif géométrique, notamment des franges lumineuses.

3. Dispositif de reconstruction tridimensionnelle selon la revendication 1 ou la revendication 2, dans lequel le dispositif d'analyse (12) est programmé pour calculer, à partir d'au moins une image (10) de la scène, la position de chaque point de la scène relativement au plan de projection et/ou pour calculer, à partir d'au moins une image (10) de la scène, une mesure de la profondeur de chaque point de la scène en fonction de la variation de l'homogénéité de l'intensité entre les différents points de la scène.

4. Procédé de reconstruction tridimensionnelle d'une scène par analyse d'image, comprenant les étapes de :
- projeter un premier motif lumineux et un deuxième motif lumineux complémentaires sur la scène examinée, le premier motif lumineux et le deuxième motif lumineux étant projetés suivant des axe de projection (A1 ; A2) distincts faisant un angle non nul entre eux, de manière à se superposer en formant une image projetée uniforme d'intensité homogène dans un plan de projection sensiblement confondu avec un plan de netteté maximale d'un appareil de prise d'image (4) ;
- capturer au moins une image de la scène examinée ; puis
- calculer une reconstruction tridimensionnelle de la scène par analyse de l'image capturée,
dans lequel l'étape de capture d'image comprend la capture d'une série d'images (10) de la scène en déplaçant conjointement le plan de netteté maximale et le plan de projection par rapport à la scène entre les prises de vue, l'étape de calcul d'une reconstruction tridimensionnelle comprenant le calcul de la reconstruction tridimensionnelle de la scène plan par plan à partir de la série d'images (10), à partir d'une mesure de la variation de l'homogénéité de l'intensité lumineuse sur chaque image (10) de la scène.

5. Procédé de reconstruction tridimensionnelle selon la revendication 4, dans lequel le premier motif et le deuxième motif comprennent chacun des zones lumineuses et des zones sombres formant un motif géométrique, notamment des franges lumineuses.

6. Procédé de reconstruction tridimensionnelle selon la revendication 4 ou la revendication 5, dans lequel l'étape de calcul d'une reconstruction tridimensionnelle comprend le calcul, à partir d'au moins une image (10) de la scène, de la position de chaque point de la scène relativement au plan de projection et/ou le calcule, à partir d'au moins une image capturée, d'une mesure de la profondeur de chaque point de la scène en fonction de la variation de l'homogénéité de l'intensité entre les différents points de la scène.

## Patentansprüche

1. Vorrichtung zur dreidimensionalen Rekonstruktion einer Szene durch eine Bildanalyse, eine Bildaufnahmevorrichtung (4) zum Aufnehmen von Bildern der Szene, eine Analysevorrichtung (12) zum Berechnen einer dreidimensionalen Rekonstruktion der Szene aus mindestens einem Bild (10) der Szene, das durch die Bildaufnahmevorrichtung (4) aufgenommen wurde, und eine Projektionsvorrichtung (14) zum Projizieren eines ersten Lichtmusters und eines zweiten, komplementären Lichtmusters auf die untersuchte Szene umfassend, wobei das erste Lichtmuster und das zweite Lichtmuster gemäß unterschiedlichen Projektionsachsen (A1; A2), die zwischen sich einen Winkel einschließen, der nicht null, derart projiziert werden, dass sie sich unter Bildung eines gleichmäßigen Bildes homogener Intensität in einer Projektionsebene überlagern, die im Wesentlichen mit einer Ebene maximaler Schärfe der Bildaufnahmevorrichtung (4) übereinstimmt, wobei die Vorrichtung zur dreidimensionalen Rekonstruktion programmiert ist, eine Reihe von Bildern (10) der Szene aufzunehmen, wobei zusammen die Ebene der maximalen Schärfe und die Projektionsebene in Bezug auf die Szene zwischen den Aufnahmen verschoben werden, wobei die Analysevorrichtung (12) programmiert ist, eine dreidimensionale Rekonstruktion der Szene Ebene pro Ebene aus der Reihe von Bildern (10), aus einem Maß der Änderung der Homogenität der Lichtintensität auf jedem Bild (10) der Szene zu berechnen.

2. Vorrichtung zur dreidimensionalen Rekonstruktion nach Anspruch 1, bei der das erste Lichtmuster und das zweite Lichtmuster jeweils Lichtzonen und Dunkelzonen umfassen, die ein geometrisches Muster, insbesondere Lichtstreifen, bilden.

3. Vorrichtung zur dreidimensionalen Rekonstruktion nach Anspruch 1 oder Anspruch 2, bei der die Analysevorrichtung (12) programmiert ist, aus mindestens einem Bild (10) der Szene die Position jedes Punktes der Szene relativ zur Projektionsebene zu berechnen und/oder aus mindestens einem Bild (10) der Szene ein Maß der Tiefe jedes Punktes der Szene abhängig von der Änderung der Homogenität der Intensität zwischen den unterschiedlichen Punkten der Szene zu berechnen.

4. Verfahren zur dreidimensionalen Rekonstruktion einer Szene durch Bildanalyse, die Schritte umfassend:
- Projizieren eines ersten Lichtmusters und eines zweiten komplementären Lichtmusters auf die untersuchte Szene, wobei das erste Lichtmuster und das zweite Lichtmuster gemäß unterschiedlichen Projektionsachsen (A1; A2), die zwischen sich einen Winkel bilden, der nicht null ist, derart projiziert werden, dass sie sich unter Bildung eines projizierten gleichmäßigen Bildes homogener Intensität in einer Projektionsebene überlagern, die im Wesentlichen mit einer Ebene der maximalen Schärfe einer Bildaufnahmevorrichtung (4) übereinstimmt;
- Aufnehmen mindestens eines Bildes der untersuchten Szene; dann
- Berechnen einer dreidimensionalen Rekonstruktion der Szene durch Analyse des aufgenommenen Bildes,
bei dem der Schritt der Aufnahme eines Bildes die Aufnahme einer Reihe von Bildern (10) der Szene umfasst, wobei zusammen die Ebene der maximalen Schärfe und die Projektionsebene in Bezug auf die Szene zwischen den Aufnahmen verschoben werden, wobei der Schritt des Berechnens einer dreidimensionalen Rekonstruktion der Szene das Berechnen einer dreidimensionalen Rekonstruktion der Szene Ebene pro Ebene aus der Reihe von Bildern (10), aus einem Maß der Änderung der Homogenität der Lichtintensität auf jedem Bild (10) der Szene umfasst.

5. Verfahren zur dreidimensionalen Rekonstruktion nach Anspruch 4, bei dem das erste Lichtmuster und das zweite Lichtmuster jeweils Lichtzonen und Dunkelzonen umfassen, die ein geometrisches Muster, insbesondere Lichtstreifen, bilden.

6. Verfahren zur dreidimensionalen Rekonstruktion nach Anspruch 4 oder Anspruch 5, bei dem der Schritt des Berechnens einer dreidimensionalen Rekonstruktion das Berechnen der Position jedes Punktes der Szene relativ zu der Projektionsebene aus mindestens einem Bild (10) der Szene und das Berechnen eines Maßes der Tiefe jedes Punktes der Szene aus mindestens einem aufgenommenen Bild abhängig von der Änderung der Homogenität der Intensität zwischen den verschiedenen Punkten der Szene umfasst.

## Claims

1. A device for the three-dimensional reconstruction of a scene by image analysis, comprising an image acquisition device (4) to capture images of the scene, an analysis device (12) to calculate a three-dimensional reconstruction of the scene from at least one image (10) of the scene taken by the image acquisition device (4), and a projection device (14) to project a first light pattern and a second light pattern, which are complementary, on the examined scene, the first light pattern and the second light pattern being projected along separate projection axes (A1; A2) forming a non-zero angle between them, so as to be superimposed while forming a uniform image with homogenous intensity in a projection plane, substantially combined with a maximum sharpness plane of the image acquisition device (4), wherein the device for three-dimensional reconstruction is programmed to capture a series of images (10) of the scene by jointly moving the maximum sharpness plane and the projection plane relative to the scene between each shot, the analysis device (12) being programmed to calculate a three-dimensional reconstruction of the scene, plane by plane, from the series of images (10), from a measurement of the variation in the homogeneity of light intensity in each image (10) of the scene.

2. The three-dimensional reconstruction device according to claim 1, wherein the first light pattern and the second light pattern each comprise light zones and dark zones forming a geometric pattern, in particular light fringes.

3. The three-dimensional reconstruction device according to claim 1 or claim 2, wherein the analysis device (12) is programmed to calculate, from at least one image (10) of the scene, the position of each point of the scene relative to the projection plane and/or to calculate, from at least one image (10) of the scene, a measurement of the depth of each point of the scene as a function of the variation of the homogeneity of the intensity between the different points of the scene.

4. A method for three-dimensional reconstruction of a scene by image analysis, comprising the following steps:
- projecting a first light pattern and a second light pattern, which are complementary, on the examined scene, the first light pattern and the second light pattern being projected along separate projection axes (A1; A2) forming a non-zero angle between them, so as to be superimposed while forming a uniform projected image with homogenous intensity in a projection plane substantially combined with a maximum sharpness plane of an image acquisition device (4);
- capturing at least one image of the examined scene; then
- calculating a three-dimensional reconstruction of the scene by analysis of the captured image,
wherein the image capturing step comprises capturing a series of images (10) of the scene by jointly moving the maximum sharpness plane and the projection plane relative to the scene between each shot, the step for calculating a three-dimensional reconstruction comprising calculating the three-dimensional reconstruction of the scene, plane by plane, from the series of images (10) from a measurement of the variation in the homogeneity of light intensity in each image (10) of the scene.

5. The three-dimensional reconstruction method according to claim 4, wherein the first pattern and the second pattern each comprise light zones and dark zones forming a geometric pattern, in particular light fringes.

6. The three-dimensional reconstruction method according to claim 4 or claim 5, wherein the step for calculating a three-dimensional reconstruction comprises calculating, from at least one image (10) of the scene, the position of each point of the scene relative to the projection plane and/or calculating, from at least one captured image, a measurement of the depth of each point of the scene as a function of the variation of the homogeneity of the intensity between the different points of the scene.
